# EUROPEAN PATENT SPECIFICATION

(11) **EP 2 011 143 B1**
(45) Date of publication and mention of the grant of the patent: **16.03.2016**
(21) Application number: 07754323.9
(22) Date of filing: 28.03.2007
(51) Int. Cl.: F16D 69/02, C08L 61/14, D06M 13/282, D06M 15/41

(54) **FRICTION MATERIALS MADE WITH RESINS CONTAINING POLAR FUNCTIONAL GROUPS**
REIBUNGSMATERIALIEN AUS HARZEN MIT POLAREN FUNKTIONELLEN GRUPPEN
MATERIAUX DE FROTTEMENT EN RESINES CONTENANT DES GROUPEMENTS FONCTIONNELS POLAIRES

(30) Priority: 29.03.2006 US 787718 P
(43) Date of publication of application: 07.01.2009
(73) Proprietor: BorgWarner, Inc., Auburn Hills, MI 48326-2872 (US)
(72) Inventor: NEWCOMB, Timothy, P., Rochester Hills, Michigan 48306 (US); DONG, Feng, Rochester Hills, MI 48306 (US); CIUPAK, Brian, Howell, MI 48843 (US)
(74) Representative: Plate, Jürgen
(86) International application number: PCT/US2007/007788
(87) International publication number: WO 2007/126970

(56) References cited:
- US-A- 5 266 395
- US-A- 5 376 425
- US-A- 5 674 947
- US-A- 6 140 388
- US-A1- 2006 019 085
- US-B1- 6 231 977

## Description

### TECHNICAL FIELD

The present invention relates to friction materials made with resins possessing at least one functional group that can interact with the lubricant. Such groups have an affinity towards the polar or aromatic components in the automatic transmission fluid and interact with these components to affect the lubricant film composition and structure. The degree of interaction can be quantified through the measurement of the heat-of-adsorption of a probe molecule, representative of the fluid components, and the resin.

### BACKGROUND ART

New and advanced automatic transmission systems, having continuous slip torque converters and shifting clutches are being developed by the automotive industry. The development of these new systems is driven by the need to improve fuel efficiency. Therefore, the friction material technology must be also developed to meet the increasing requirements of these advanced systems.

In particular, as the clutch interfaces are reduced in size to reduce weight, the friction material must be able to perform in environments more severe than found in current transmissions. In this environment, the apply pressure generally must be increased to maintain torque capacity, thus increasing the energy density within the friction interface and concomitantly the interface temperature. Newer transmissions are therefore also being designed to run hotter, stressing both the friction element and the transmission fluid. This change in the interface environment can lead to early degradation of the friction modifier system contained in the lubricant, thus reducing the available concentration for adsorption onto the friction surfaces. In addition changes to the transmission designs have lead to systems that are more sensitive to increases in friction with decreased speed (negative µ-v slope).

Phenolic resins are used as an economic impregnant in friction materials for clutch and brake applications. Phenolics impart strength and rigidity to the friction material and, in wet systems, are inert to the lubricant environment. However, these resins have various limitations, most notably when used in sufficient concentration to impart strength the material may become too rigid or brittle for the application. In some high-energy friction materials the phenolic is also the least thermally stable component. Over the years many modifications have been made to phenolic resins to address these limitations including the modification of the phenolic resin with such moieties as tung oil, linseed oil, cashew nut shell oil, melamine, epoxy, various rubbers, metals, boron, refractory oxides and recently nano particles.¹ In some instances the phenolic may be replaced with another thermosetting impregnating resin. The advantages stated in all these patents and other publications deal with improvements to the resin's mechanical properties or its thermal durability.

However, phenolic resins have one other limitation that is widely recognized but not addressed in any prior art; phenolic resins exhibit little surface activity. Incorporation of phenolic resin into the friction composite, while necessary, reduces the interaction between the lubricant and the non-resin components of the friction material. As the resin level is increased, the friction characteristics, in particular the negative µ-v slope, worsen. To .overcome this limitation we have invented resins that incorporate at least one functional group to increase the surface activity of the phenolic resin and enhance frictional performance. At present there is no prior art that suggests that phenolic resin having at least one functional group can be used to provide an improved product.

### SUMMARY OF THE INVENTION

The present invention relates to friction material made with resins possessing at least one functional group. More specifically, it relates to a friction material comprising a base material impregnated with a composition comprising a resin, the resin comprising a phenolic resin, and at least one surface-active functional group chemically modifying the resin, wherein the phenolic resin is modified with aldehyde groups, acid groups, ester groups or ketone groups or wherein the phenolic resin further comprises a high number of surface hydroxyl groups that are bonded directly to phenolic rings via a hydrocarbon chain.

The functional group may be polar, ionic, electron rich or electron deficient moieties, but must possess an affinity to the additives in the lubricant. Such currently available, new or modified resins provide active sites for the adsorption of lubricant friction modifiers. This adsorption impacts the friction modifier surface-to-solution equilibrium, and correspondingly the µ-v slope and the coefficient of friction. The adsorption of friction modifiers is accompanied by the release of energy, termed the interaction energy or heat-of-adsorption, and can be measured directly to quantify the degree of the adsorption. The degree of adsorption relates directly to the affinity of the resin to the additives in the lubricant. Such heats-of-adsorption are measured utilizing a device such as a flow-microcalorimeter (FMC).² This technique is well established.³

Friction material made with resins modified according to this invention exhibits a stronger interaction, or higher heats-of-adsorption, with lubricant additives. Similar modification to the resins can allow interaction with metal surfaces also affecting performance.

Phenolic resin is used in friction material because of its high thermal stability and low cost. However the resin surface does not adsorb lubricant additives and does not bond well to some friction material components. These problems arise because the phenolic resin is chemically inert and does not interact with other materials or polar compounds. Use of more polar resins such as phenolic resins modified with polar, ionic, electron rich or electron deficient moieties will provide a surface more favorable to bonding and additive adsorption. In addition the increased surface polarity may lead to material that interacts strongly with metal surfaces thus increasing both the dynamic and static coefficients of friction. The resins may be chemically modified either before saturation to maximize the degree of modification or after saturation to concentrate the modifications on the surface of the friction material.

An example of the friction materials covered under this invention is an aldehyde modified phenolic resin. Here the aldehyde groups were bonded directly to the cured resin, after the resin was incorporated into the friction material composite, via the unreacted ortho and para sites on the phenol ring. The density of the aldehyde groups is between 2.5% to 3% of the material weight with a chain length of 6 carbon-carbon bonds. Such modification leads to enhancements in the materials ability to adsorb friction modifiers. In this case the affinity of the final friction material composite was increased 10-fold.

The friction material can be employed in the form of a clutch facing, a brake shoe lining or a synchronizer.

### BRIEF DESCRIPTION OF THE DRAWINGS

Fig. 1 is an illustration of the Flow-microcalorimeter method of measuring resin affinity to lubricant components.
Fig. 2 shows the reduction in friction material affinity to lubricant components when impregnated with conventional phenolic resin.
Fig. 3 compares the affinity to lubricant components of conventional phenolic resin and the affinity of a resin designed with polar functional groups.
Fig. 4 compares the improvement in affinity to lubricant components of a friction material when the conventional phenolic resin is replaced with a representative resin possessing polar functional groups.
Fig. 5 shows the measured 10-fold increase in the affinity to lubricant components of a frictional material when the conventional phenolic resin is replaced with an aldehyde-modified resin.
Fig. 6 compares the dynamic midpoint coefficient-of-friction of a low energy friction material made with Resin A (a phenolic resin modified to contain hydroxyl groups possessing a surface affinity of 100 mJ/g) to the same friction material made with a conventional phenolic.
Fig. 7 compares the torque traces showing the coefficient-of-friction variation with time during a shifting engagement of a low energy friction material made with Resin A (a phenolic resin modified to contain hydroxyl groups possessing a surface affinity of 100 mJ/g) to the same friction material made with a conventional phenolic.
Fig. 8 compares the dynamic midpoint coefficient-of-friction of a moderate energy friction material made with Resin A (a phenolic resin modified to contain hydroxyl groups possessing a surface affinity of 100 mJ/g) to the same friction material made with a conventional phenolic.
Fig. 9 compares the torque traces showing the coefficient-of-friction variation with time during a shifting engagement of a moderate energy friction material made with Resin A (a phenolic resin modified to contain hydroxyl groups possessing a surface affinity of 100 mJ/g) to the same friction material made with a conventional phenolic.
Fig. 10 compares the dynamic midpoint coefficient-of-friction of a low energy friction material made with Resin B (a phenolic resin modified to contain hydroxyl groups possessing a surface affinity of 200 mJ/g) to the same friction material made with a conventional phenolic.
Fig. 11 compares the torque traces showing the coefficient-of-friction variation with time during a shifting engagement of a low energy friction material made with Resin B (a phenolic resin modified to contain hydroxyl groups possessing a surface affinity of 200 mJ/g) to the same friction material made with a conventional phenolic.
Fig. 12 compares the dynamic midpoint coefficient-of-friction of a moderate energy friction material made with Resin C (a phenolic resin modified to contain hydroxyl groups possessing a surface affinity of 110 mJ/g) to the same friction material made with a conventional phenolic.
Fig. 13 compares the torque traces showing the coefficient-of-friction variation with time during a shifting engagement of a moderate energy friction material made with Resin C (a phenolic resin modified to contain hydroxyl groups possessing a surface affinity of 110 mJ/g) to the same friction material made with a conventional phenolic.

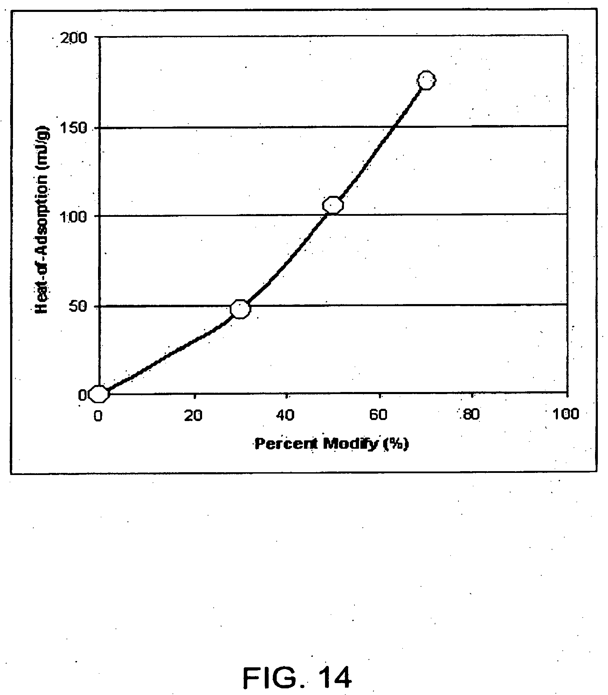

Fig. 14 is a graph showing an increase in adsorption and the degree of modification.

### DETAILED DESCRIPTION OF THE INVENTION

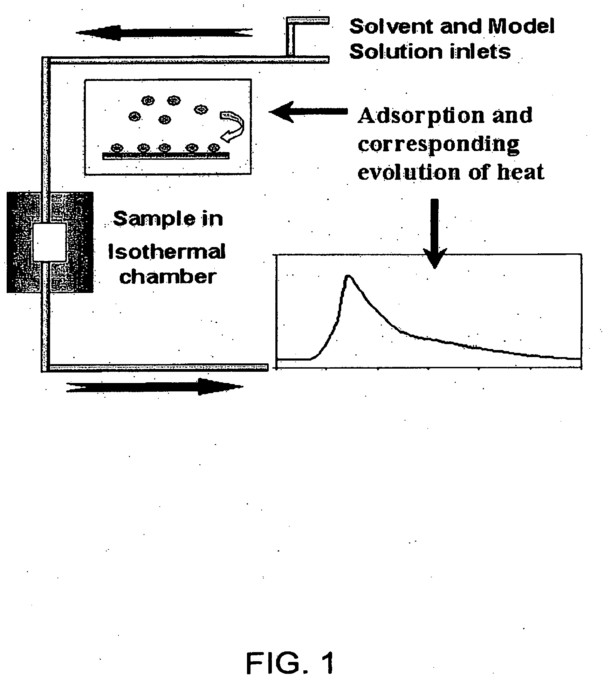

This invention teaches how polarity and chemical structure of the resin affects µ-v shape and static coefficient. Resin, or modified resin, that contain functional groups possessing affinity towards lubricant additives provide for enhancement of additive interaction with the friction material surface over conventional friction resins. This design of the resin influences the additive adsorption equilibrium in the friction interface and therefore optimizes friction parameters. A convenient method to measure the increased additive affinity is with the use of a FMC.³ A diagram of how the FMC technique operates is shown in Figure 1. A cured resin is introduced into the sample chamber. A solution of a probe molecule, representative of additives in the lubricant, is then flowed over the resin. If the resin possesses an affinity towards the probe molecule, then heat is evolved as the probe molecule is adsorbed onto the resin surface. The amount of the heat-of-adsorption directly relates to the affinity of the resin to lubricant additives. Details of the theory and operation of the FMC are discussed in the literature.³ In the majority of this work, a 0.2% solution of aminodecane in a nonpolar solvent, such as heptane, was used. However, other concentrations, probe molecules and solvents are acceptable and have been used.

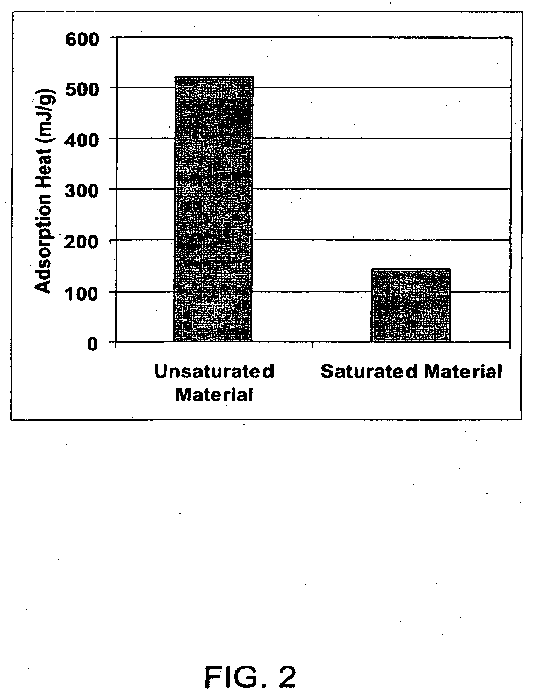

Phenolic resin is known to have negative impact on the coefficient-of-friction characteristics. Unsaturated friction material possesses a high affinity towards lubricant additives. However, once impregnated with phenolic resin, this affinity is drastically reduced. This is illustrated in Figure 2. FMC measurements show that pure phenolic resin possesses absolutely no affinity towards lubricant additives (zero heat-of-adsorption).

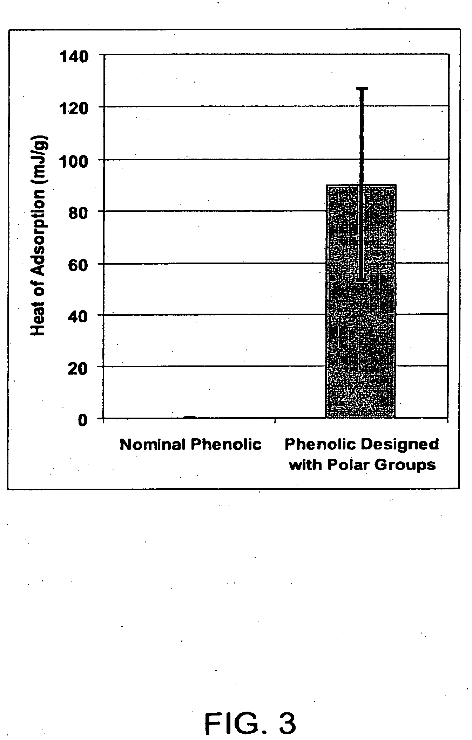

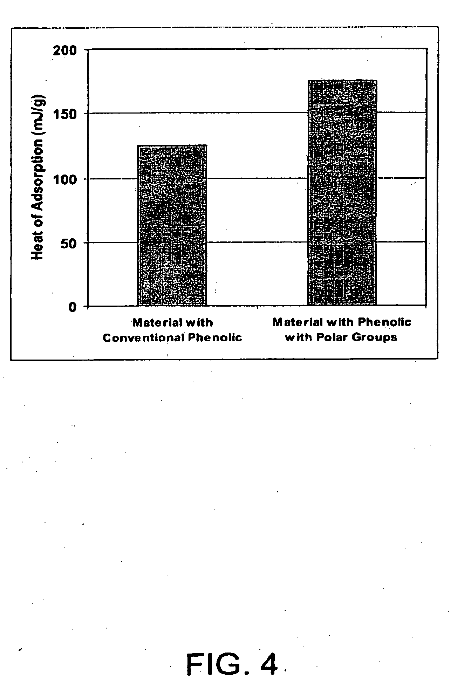

Our concept modifies the phenolic such that it contains active groups by adding to the phenolic resin active resins that promote additive adsorption and consequently improved µ-v character. Figure 3 compares the heats-of-adsorption of conventional phenolic resin with one of our designed resins containing polar groups. When such resins are incorporated into the friction material, the resulting composite possesses a greater affinity towards lubricant additives than the corresponding composite made with conventional phenolic. A representative example is shown in Figure 4.

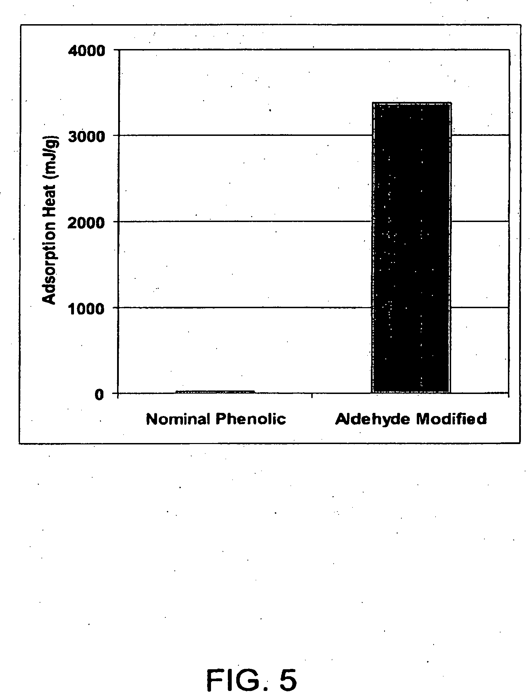

Our modification considers level of treatment (number of active sites needed), structure of the active group (how accessible to interface) and chemical activity of each site. The use of the aldehyde modified resin, referenced previously, increases the affinity of the material to lubricants 10-fold. This data is shown in Figure 5.

In one aspect, the present invention relates to a friction material comprising a base material impregnated with a resin possessing at least one type of function group. In the preferred embodiments, the resin is comprised of phenolic monomers having at least one function polar group; for example a phenolic resin possesses a high number of surface hydroxyl groups that are bonded directly to phenolic rings via a hydrocarbon chain. The length and structure of the chain and density of the groups can be altered so that the modificed resin has sufficient reactive sites on its surface that interact with polar molecules. Examples of modifications covered in this patent are aldehyde, amine, alcohol, ester, ketone, halogenated, acids, acid anhydrides and metal salts. Alkane, alkene, aromatic and branched and crosslinked structures also may be included in the modifications.

In order to achieve the requirements discussed above, many modified resins were prepared and the affinity to lubricant additives measured. In addition friction materials made with these resins were evaluated for friction under conditions similar to those encountered during operation. Commercially available friction materials were used as a control.

The modified resins include an organic compound incorporating one or more high polarity function groups. The polar functional groups include an acid functionality, an alcohol functionality, a ketone functionality, an aldehyde functionality or an ester linkage.

Specific examples of materials classes are as follows:
The acids are polymers containing an acid functionality. They include carboxylic acid, for example, such as those constructed with acrylic acid, methacrylic acid, citraconic, and fumaric acid.

The alcohol are materials such as polyvinyl alcohol.

The ketones include a ketone group that confers water solubility to materials such as vinyl pyrrolidone polymer.

The aldehydes are very similar chemically to ketones, with the doubly bonded oxygen situated at the end of a chain, rather than in the chain. An aldehyde functionality situated on a side chain would enhance solubility of any polymer in aqueous media.

The esters have ester functionality such as for instance polyvinyl acetate.

The acid functionality may be incorporated in the resin by incorporating acid-containing monomers. Useful acid containing monomers include those monomers having carboxylic acid functionality, such as for example acrylic acid, methacrylic acid, itaconic acid, fumaric acid, cirtraconic acid, phospoethyl methacrylate and the like. A wide variety of monomers or mixture of monomers can be used to make the modified resins. For example, acrylic ester monomers, including methyl acrylate, ethyl acrylate, propyl acrylate, isopropyl acrylate, butyl acrylate, isobutyl acrylate, secondary butyl acrylate, and the like.

The present invention further provides a friction material where the surface of the resin impregnated friction material is available for secondary chemical modifications.

Other ingredients and processing aids known to be useful in both preparing resin blends and in preparing fibrous base materials can be included, and are within the contemplated scope of the present invention.

Figure 1. An illustration of the Flow-microcalorimeter technique of measuring the resin affinity to lubricant components (heat-of-adsorption).

Figure 2. The reduction in friction material affinity to lubricant components when impregnated with conventional phenolic resin.

Figure 3. A comparison of the affinity to lubricant components of conventional phenolic resin to the affinity of a resin designed with polar functional groups.

Figure 4. A comparison of the improvement in affinity to lubricant components of a friction material when the conventional phenolic resin is replaced with a representative resin possessing polar functional groups.

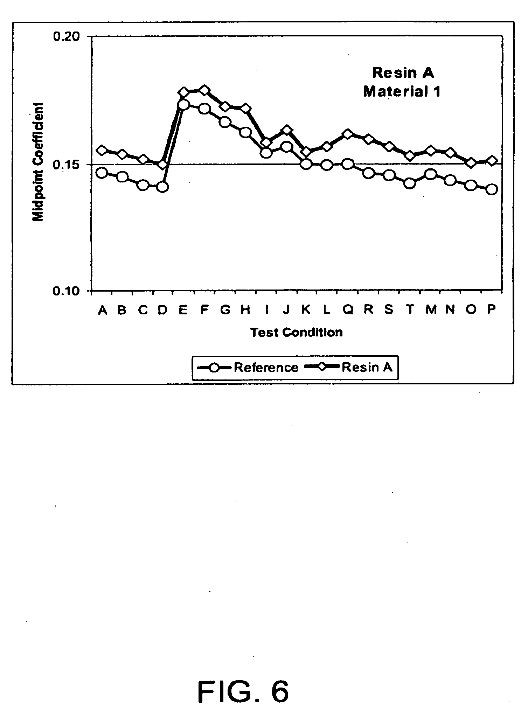

Figure 6. Comparison of the dynamic midpoint coefficient-of-friction of a low energy friction material made with Resin A (a phenolic resin modified to contain hydroxyl groups possessing a surface affinity of 100 mJ/g) to the same friction material made with a conventional phenolic.

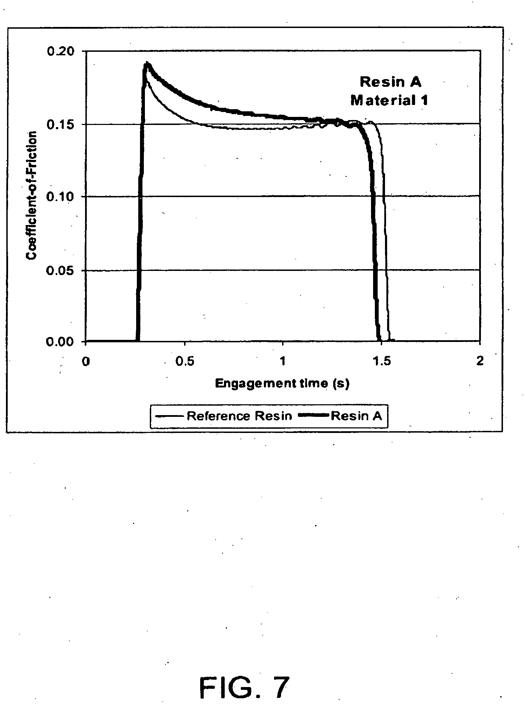

Figure 7. Comparison of the torque traces showing the coefficient-of-friction variation with time during a shifting engagement of a low energy friction material made with Resin A (a phenolic resin modified to contain hydroxyl groups possessing a surface affinity of 100 mJ/g) to the same friction material made with a conventional phenolic.

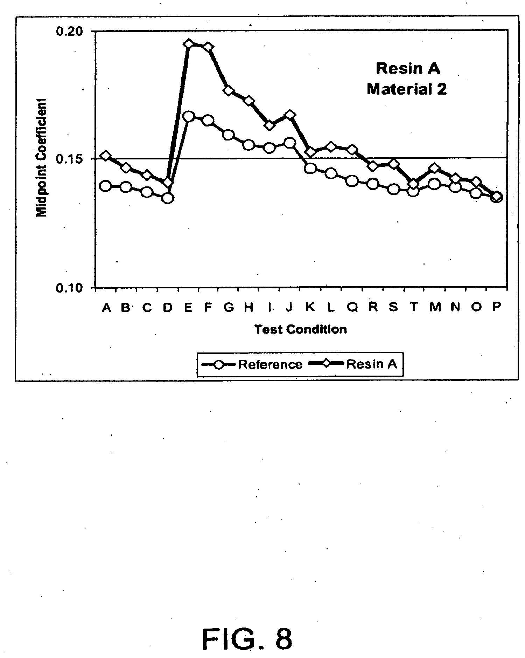

Figure 8. Comparison of the dynamic midpoint coefficient-of-friction of a moderate energy friction material made with Resin A (a phenolic resin modified to contain hydroxyl groups possessing a surface affinity of 100 mJ/g) to the same friction material made with a conventional phenolic.

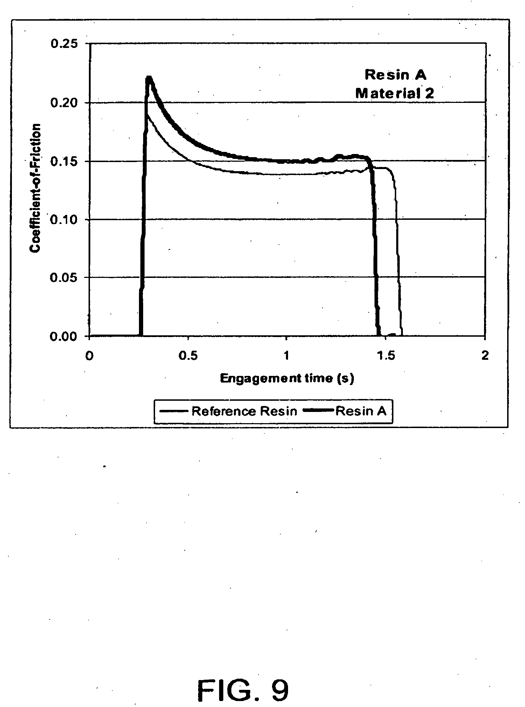

Figure 9. Comparison of the torque traces showing the coefficient-of-friction variation with time during a shifting engagement of a moderate energy friction material made with Resin A (a phenolic resin modified to contain hydroxyl groups possessing a surface affinity of 100 mJ/g) to the same friction material made with a conventional phenolic.

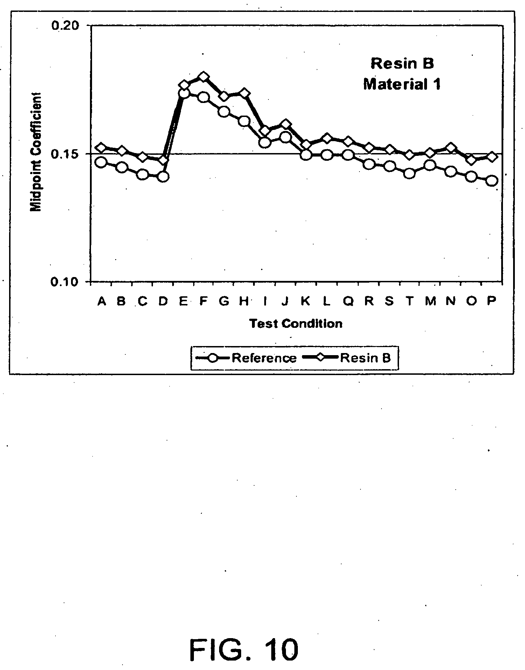

Figure 10. Comparison of the dynamic midpoint coefficient-of-friction of a low energy friction material made with Resin B (a phenolic resin modified to contain hydroxyl groups possessing a surface affinity of 200 mJ/g) to the same friction material made with a conventional phenolic.

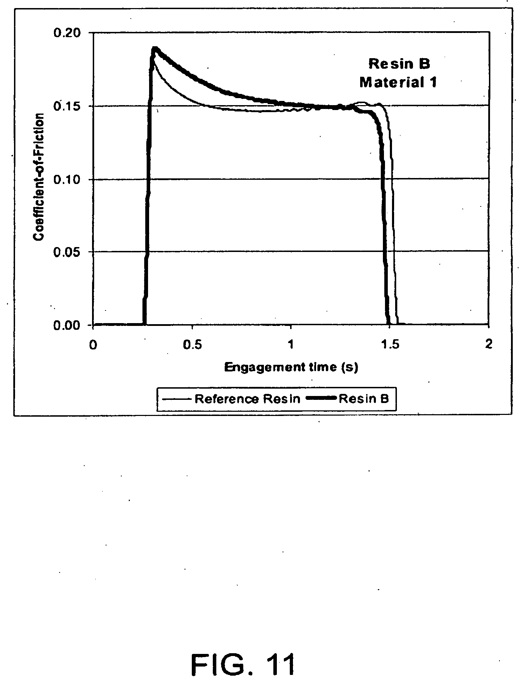

Figure 11. Comparison of the torque traces showing the coefficient-of-friction variation with time during a shifting engagement of a low energy friction material made with Resin B (a phenolic resin modified to contain hydroxyl groups possessing a surface affinity of 200 mJ/g) to the same friction material made with a conventional phenolic.

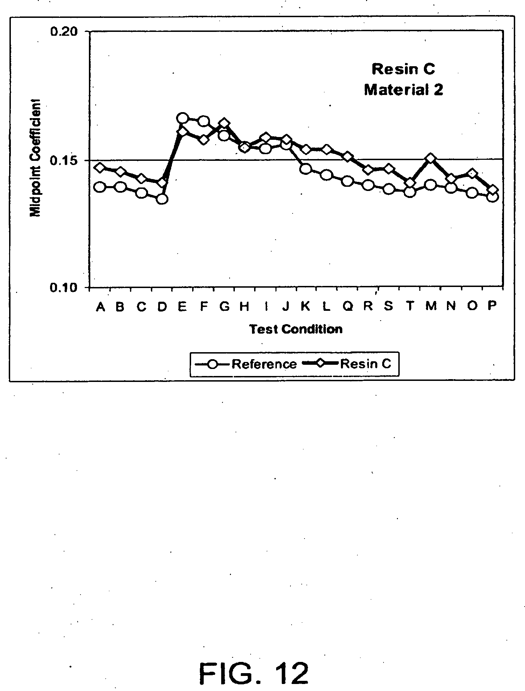

Figure 12. Comparison of the dynamic midpoint coefficient-of-friction of a moderate energy friction material made with Resin C (a phenolic resin modified to contain hydroxyl groups possessing a surface affinity of 110 mJ/g) to the same friction material made with a conventional phenolic.

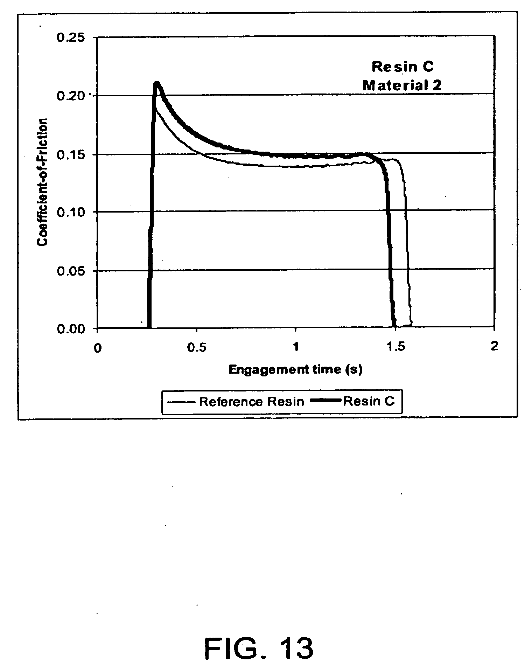

Figure 13. Comparison of the torque traces showing the coefficient-of-friction variation with time during a shifting engagement of a moderate energy friction material made with Resin C (a phenolic resin modified to contain hydroxyl groups possessing a surface affinity of 110 mJ/g) to the same friction material made with a conventional phenolic.

### Base Materials

Various base materials are useful in the friction material of the present invention, including, for example, non-asbestos fibrous base materials comprising, for example, fabric materials, woven and/or nonwoven materials. Suitable fibrous base materials include, for example, fibers and fillers. The fibers can be organic fibers, inorganic fibers and carbon fibers. The organic fibers can be aramid fibers, such as fibrillated and/or nonfibrillated aramid fibers, acrylic fibers, polyester fibers, nylon fibers, polyamide fibers, cotton/cellulose fibers and the like. The fillers can be, for example, silica, diatomaceous earth, graphite, alumina, cashew dust and the like. In particular, silica fillers, such as diatomaceous earth, are useful. However, it is contemplated that other types of fillers are suitable for use in present invention and that the choice of filler depends on the particular requirements of the friction material.

In other embodiments, the base material can comprise fibrous woven materials, fibrous non-woven materials, and composite materials. Further, examples of the various types of fibrous base materials useful in the present invention are disclosed in many BorgWarner U.S. patents. It should be understood however, that other embodiments of the present invention can include yet different fibrous base materials.

A preferred base material comprises from about 5 to about 75 % cotton fibers, about 5 to about 75 % aramid fibers, and 5 to about 75 % carbon fibers. A particularly preferred base material comprises about 5 to about 75 % by weight of a less fibrillated aramid fiber; about 5 to about 75 % by weight cotton fibers, about 5 to about 75 % by weight carbon fibers; and about 5 to about 75 % by weight of a filler material.

Preferably, the base material has an average pore diameter of about 0.5 to about 200 µm.

### EXAMPLES

The following examples provide further evidence that the friction material of the present invention provides an improvement over conventional friction materials. The test results show the modified resins have a desirable impact on coefficient of friction. The heat-of-absorption for the modified resins are substantial higher than non-modifed resins. Various preferred embodiments of the invention are described in the following examples, which however, are not intended to limit the scope of the invention.

Instead of using an unmodified phenolic resin as an impregnant, the present invention provides a friction material impregnated with a phenolic resin possessing functional polar groups into the friction material formulation.

### Example 1

Low energy friction material saturated with Resin A: A phenolic resin modified to contain hydroxyl groups possessing a surface affinity (heat-of-adsorption to 0.2% aminodecane) of 100 mJ/g. This resin was incorporated into a friction composite and tested for both friction level and friction µ-v characteristic. The friction characteristics were contrasted against those of the same friction material saturated with a conventional phenolic. Charts of the midpoint dynamic coefficient-of-friction for both materials made with Resin A and the conventional phenolic are shown in Figure 6. Charts of the torque trace taken from a break-in cycle shows improved µ-v characteristic for both materials made with Resin A and the conventional phenolic are shown in Figure 7. In both cases there was an improvement over the conventional resin system.

### Example 2

A moderate energy friction material saturated with Resin A: A phenolic resin modified to contain hydroxyl groups possessing a surface affinity (heat-of-adsorption to 0.2% aminodecane) of 100 mJ/g. This resin was incorporated into a friction composite and tested for both friction level and friction µ-v characteristic. The friction characteristics were contrasted against those of the same friction material saturated with a conventional phenolic. Charts of the midpoint dynamic coefficient-of-friction for both materials made with Resin A and the conventional phenolic are shown in Figure 8. Charts of the torque trace taken from a break-in cycle shows improved µ-v characteristic for both materials made with Resin A and the conventional phenolic are shown in Figure 9. In both cases there was an improvement over the conventional resin system.

### Example 3

Low energy friction material saturated with Resin B: A phenolic resin modified to contain hydroxyl groups possessing a surface affinity (heat-of-adsorption to 0.2% aminodecane) of 200 mJ/g. This resin was incorporated into a friction composite and tested for both friction level and friction µ-v characteristic. The friction characteristics were contrasted against those of the same friction material saturated with a conventional phenolic. Charts of the midpoint dynamic coefficient-of-friction for both materials made with Resin A and the conventional phenolic are shown in Figure 10. Charts of the torque trace taken from a break-in cycle shows improved µ-v characteristic for both materials made with Resin A and the conventional phenolic are shown in Figure 11. In both cases there was an improvement over the conventional resin system.

### Example 4

A moderate energy friction material saturated with Resin C: A phenolic resin modified to contain hydroxyl groups possessing a surface affinity (heat-of-adsorption to 0.2% aminodecane) of 110 mJ/g. This resin was incorporated into a friction composite and tested for both friction level and friction µ-v characteristic. The friction characteristics were contrasted against those of the same friction material saturated with a conventional phenolic. Charts of the midpoint dynamic coefficient-of-friction for both materials made with Resin A and the conventional phenolic are shown in Figure 12. Charts of the torque trace taken from a break-in cycle shows improved µ-v characteristic for both materials made with Resin A and the conventional phenolic are shown in Figure 13. In both cases there was an improvement over the conventional resin system.

### Example 5

Resin D, which is a phenolic resin modified to contain polar groups, wherein the polar group is connected to the phenolic backbone polymer with a carbon chain of greater than 10 carbon-carbon units, possessing a surface affinity (heat-of-adsorption to 0.2% aminodecane) of 240 mJ/g. When incorporated into a low energy friction material, the final composite shows almost a 2-fold increase in affinity to lubricant additives (126 mJ/g to 220 mJ/g) when compared with material made with a conventional phenolic.

### Example 6

Resin E, which is a phenolic resin modified to contain polar groups, wherein the polar group is connected to the phenolic backbone polymer with a carbon chain of greater than 10 carbon-carbon units, possessing a surface affinity (heat-of-adsorption to 0.2% aminodecane) of 200 mJ/g.

### Example 7

Resin F, which is a phenolic resin that was modified to contain aldehyde groups, possessing a surface affinity (heat-of-adsorption to 0.2% aminodecane) of 3400 mJ/g. Here the aldehyde groups were bonded directly to the cured resin, after the resin was incorporated into the friction material composite, via the unreacted ortho and para sites on the phenol ring. The density of the aldehyde groups is between 2.5% to 3% of the material weight with a chain length of 6 carbon-carbon bonds.

### Example 8 (comparative)

A commercially available resin that is not a phenolic, though contains some phenolic functionality, and possesses a surface affinity (heat-of-adsorption to 0.2% aminodecane) of 3800 mJ/g.

### INDUSTRIAL APPLICABILITY

The present invention is useful as a high energy friction material for use with clutch plates, transmission bands, brake shoes, synchronizer rings, friction disks or system plates.

### References

1. Patents and other documents pertaining to the modification of phenolic resin for use in friction material:
   Li, Yi; Zhou, Yuankang; Yao, Jin; Wang, Manli. Study on properties of phenolic resin modified with boron and tung oil used for friction materials. Runhua Yu Mifeng (2006), (1), 86-87,90. CODEN: RYMID2 ISSN:0254-0150. AN 2007:234188
   Yuan, Xin-hua; Chen, Min; Shao, Mei-xiu; Wang, Jian-min; Chen, Zhengnan. Study on the linseed oil-modified phenolci resin used for friction material. Gaofenzi Cailiao Kexue Yu Gongcheng (2006), 22(6), 181-183,187. CODEN: GCKGEI ISSN:1000-7555. AN 2007:52624
   Nidhi; Satapathy, B. K.; Bijwe, J.; Majumdar, N. Influence of modified phenolic resins on the fade and recovery properties of the friction materials: supportive evidence multiple criteria decision-making method (MCDM). Journal of Reinforced Plastics and Composites (2006), 25(13), 1333-1340. CODEN: JRPCDW ISSN:0731-6844. AN 2006:1014624
   Qiu, Jun; Wang, Guojian. Process for preparation of boron-modified phenolic resin with high boron content. Faming Zhuanli Shenqing Gongkai Shuomingshu (2006), 7pp. CODEN: CNXXEV CN 1817928 A 20060816 CAN 145:272169 AN 2006:844046
   Li, Yi; Yao, Jin; Zhou, Yuankang; Wang, Manli. Phenolic resin modified compositely and its application in friction materials. Feijinshukuang (2005), 28(4), 57-58, 62. CODEN: FEIJDJ ISSN:0253-2298. AN 2006:737765
   Yu, Zhongxin; Hu, Ping; Zhang, Tao; Cheng, Hao; Gong, Zhihai. Characterization of modified phenolic resin of automobile synchronizing ring friction materials. Runhua Yu Mifeng (2005), (2), 86-88. CODEN: RYMID2 ISSN:0254-0150. AN 2006:457658
   Li, Oingshan; Wang, Xinwei; Ye, Dakeng. Preparation of heat-resistant phenolic resin by modified with inorganic mineral and boron compound. Faming Zhuanli Shenqing Gongkai Shuomingshu (2006), 4 pp. CODEN: CNXXEV CN 1760229 A 20060419 CAN 145:28665 AN 2006:402870
   Yuan, Xinhua; Cheng, Xiaonong; Chen, Min; Shao, Meixiu; Wang, Jianmin; Chen, Zhengnan. Method for preparing linseed oil modified phenolic resin for friction materials. Faming Zhuanli Shenqing Gongkai Shuomingshu (2006), 8 pp. CODEN: CNXXEV CN 1752122 A 20060329 CAN 145:46399 AN 2006:318757
   Zhang, Yu-jun; Hu, Yi-qiang. Clutch friction materials with three-components resin by cold-press process. Gongneng Gaofenzi Xuebao (2005), 18(3), 509-513. CODEN: GGXUEH ISSN:1008-9357. CAN 145:28633 AN 2005:1152712
   Li, Yi; Yao, Jin; Zhou, Yuankang. Properties of friction materials made from modified phenolic resin. Huagong Xinxing Cailiao (2005), 33(6), 42-43. CODEN: HXCUA4 ISSN:1006-3536**.** CAN 144:469100 AN 2005:995183
   Bijwe, J.; Nidhi; Majumdar, N.; Satapathy, B. K. Influence of modified phenolic resins on the fade and recovery behavior of friction materials. Wear (2005), 259(Pt. 2), 1068-1078. CODEN: WEARAH ISSN:0043-1648. CAN 144:193209 AN 2005:518385
   Zhuang, Guangshan; Wang, Chengguo; Wang, Haiqing; Sun, Yi; Yao, Yongqiang. Friction material of rubber-modified phenolic resin. Xiangjiao Gongye (2003), 50(7), 407-410. CODEN: XIGOED ISSN:1000-890X. **CAN 144:88943 AN 2005:294099**
   Zeng, Xian-you; Huang, Chou; Huang, Hong-ming; Guo, Hui-ling. Study on modified phenolic resin prepared by acrylonitrile butadiene rubber powder and cashew nut oil. Huaxue Yu Shengwu Gongcheng (2005), 22(2), 21-23. CODEN: HYSGAF ISSN:1672-5425. CAN 144:23501 AN 2005:274608
   Cao, Xian-kun; Yang, Xiao-yan. Study on the properties of high-temperature modified phenolic resin. Wuhan Huagong Xueyuan Xuebao (2004), 26(4), 59-61, 92. CODEN: WXUXEY ISSN:1004-4736. CAN 143:287064 AN 2005:65062
   Matsuo, Yoshihiro. Phenolic resin compositions for friction materials with high strength, hardness, and good flexibility. Jpn. Kokai Tokkyo Koho (2004), 9 pp. CODEN: JKXXAF JP 2004269613 A 20040930 CAN 141:296968 AN 2004:798646
   Ikeguchi, Junichi; Kasai, Akihiko; Kato, Takashi. Wet-type friction materials with high friction coefficient and resistance to wear and heat. Jpn. Kokai Tokkyo Koho (2004), 8 pp. CODEN: JKXXAF JP 2004256560 A 20040916 CAN 141:244734 AN 2004:758841
   Wang, Man-li; Zhou, Yuan-kang; Li, Yi; Zeng, Ling-hong; Wang, Zhao-bin. Heat resistance of boron phenolic resin modified by tung oil and friction property of its complex material. Jingxi Huagong (2004), 21(6), 477-480. CODEN: JIHUFJ ISSN:1003-5214. CAN 142:336986 AN 2004:599423
   Okuyama, Masaru; Ota, Takashi; Shimura, Yoshio; Toyama, Mamoru; Omori, Toshihide; Nagasawa, Yuji; Osawa, Masataka. Resin materials containing rigid fibers and wet-type CVT (continuous variable transmission) belts using them with improved abrasion resistance and reduced power loss. Jpn. Kokai Tokkyo Koho (2004), 16 pp. CODEN: JKXXAF JP 2004197829 A 20040715 CAN 141:107375 AN 2004:568972
   Tani, Takao; Takatori, Kazumasa; Toyama, Mamoru; Okuyama, Masaru; Omori, Toshihide; Ota, Takashi; Kawabata, Masataka. Wet friction materials and their manufacture. Jpn. Kokai Tokkyo Koho (2004), 14 pp. CODEN: JKXXAF JP 2004137305 A 20040513 CAN 140:392059 AN 2004:391304
   Lu, Rong-jin; Hu, Yi-qiang. Cold-press process of friction materials with two-component resin. Jixie Gongcheng Cailiao (2003), 27(8), 34-37. CODEN: JGCAEL ISSN:1000-3738. CAN 141:424962 AN 2004:248203
   Zhuang, Guang-shan; Wang, Cheng-guo; Wang, Hai-qing; Sun, Yi; Yao, Yong-qiang. Influence of friction pair combination on tribological performance. Jixie Gongcheng Cailiao (2003), 27(11), 52-54. CODEN: JGCAEL ISSN:1000-3738. CAN 141:280769 AN 2004:246483
   Zhuang, Guang-Shan; Wang, Cheng-Guo; Wang, Hai-Qing; Sun, Yi. Study on friction coefficient of a modified phenolic based composition. Hangkong Cailiao Xuebao (2003), 23(3), 42-45. CODEN: HCXUFZ ISSN:1005-5053. CAN 140:391822 AN 2003:790715
   Chizaki, Toshihide; Imamura, Takahiro; Yoshida, Mutsumi. Styrene-modified phenol oligomer-based damping materials. Jpn. Kokai Tokkyo Koho (2003), 5 pp. CODEN: JKXXAF JP 2003193024 A 20030709 CAN 139:86430 AN 2003:525572
   Wang, Jin-fu; Wei, Yong-de. Addition of B4C to NBR-modified phenolic resins and its effect on the performance of the friction materials. Tansu Jishu (2002), (4), 1-4. CODEN: TAJIFD ISSN:1001-3741. CAN 140:164660 AN 2003:455317
   Zhuang, Guangshan; Wang, Chengguo; Wang, Haiqing; Sun, Yi; Yao, Yongqiang. Study on rubber-modified phenolic resin. Gongcheng Suliao Yingyong (2003), 31(2), 8-11. CODEN: GSYOAG ISSN:1001-3539. CAN 140:77858 AN 2003:347208
   Zhang, Xi-kui; Wang, Cheng-guo; Wang, Hai-qing. Study on phenolic friction materials modified by latex. Cailiao Kexue Yu Gongcheng Xuebao (2003), 21(1), 91-94. CODEN: CKYGAS CAN 139:180793 AN 2003:195663
   Liu, Xiaohong; Hu, Renzhi; Gou, Xiaohui. Heat-resistant friction materials based on molybdenum-modified phenolic resin. Gongcheng Suliao Yingyong (2002), 30(9), 4-6. CODEN: GSYOAG ISSN:1001-3539. CAN 138:386402 AN 2003:1796
   McCormick, B. H. The interactions of phenolic polymers in friction materials. Braking 2002: From the Driver to the Road, International Conference, Leeds, United Kingdom, July 10-12, 2002 (2002), 355-367. CODEN: 69CZYA CAN 138:154518 AN 2002:645790
   Liu, Jie; Zhang, Fu-xin; Zhang, Wen-mei; Zhang, Qi-fang; Wang, Jun. Phenolic resin-based composite friction materials. Xinyang Shifan Xueyuan Xuebao, Ziran Kexueban (2002), 15(1), 98-100. CODEN: XSXKFL ISSN:1003-0972. CAN 137:201987 AN 2002:291589
   Xu, Zicai; Qu, Zimei; Wen, Xuecheng; Zhou, Shuming. Production of paper base friction material. Faming Zhuanli Shenqing Gongkai Shuomingshu (2001), 9 pp. CODEN: CNXXEV CN 1292465 A 20010425 CAN 135:332646 AN 2001:809156
   Fujita, Satoshi; Kobayashi, Masaaki; Paidi, lera Reddie; Inoue, Tomio. Bismaleimideymodified phenolic resins with improved heat resistance, brake pads and shoes therefrom. Jpn. Kokai Tokkyo Koho (2001), 8 pp. CODEN: JKXXAF JP 2001247640 A 20010911 CAN 135:212105 AN 2001:666602
   Sun, Jiansheng; Zhang, Tong; Li, Jihong; Wu, Chunzhi; Yan, Haixin; Ba, Suizhong. Research and development of modified phenolic resins used for friction materials. Gongcheng Suliao Yingyong (2000), 28(11), 45-47. CODEN: GSYOAG ISSN:1001-3539. CAN 135:319122 AN 2001:333920
   Ozeki, Shinichi. Properties and the development of applications of silicone gel-modified phenolic resins. Muki, Yuki Muki Haiburiddo Zairyo no Kaihatsu to Oyo (2000), 197-204. CODEN: 69BGFV CAN 135:372569 AN 2001:306340
   Ozeki, Shinichi. Silicone gel-phenolic resin composition for vibration-absorptive friction materials with good heat-resistant flexibility. Jpn. Kokai Tokkyo Koho (2001), 5 pp. CODEN: JKXXAF JP 2001049079 A 20010220 CAN 134:163904 AN 2001:124269
   Valimbe, P. S.; Malhotra, V. M.; West, R. D. Surface oxidation of phenolic disks and its effects on frictional behavior. Polymeric Materials Science and Engineering (2000), 83 15-16. CODEN: PMSEDG ISSN:0743-0515. CAN 133:267737 AN 2000:565960
   Morita, Kazuya; Sasai, Kenji. Manufacture of rubber composition-adhered prepregs for friction materials. Jpn. Kokai Tokkyo Koho (2000), 7 pp. CODEN: JKXXAF JP 2000072891 A 20000307 CAN 132:195730 AN 2000:151529
   Suzuki, Makoto; Mori, Masahiro. Phenolic resin binder for preparation of wet-frictional material with good heat and wear resistance. Jpn. Kokai Tokkyo Koho (2000), 5 pp.. CODEN: JKXXAF JP 2000063803 A 20000229 CAN 132:167502 AN 2000:139400
   Ohzeki, Shinichi. Unsaturated oil-modified phenolic resins and their compositions with good curability for binders. Jpn. Kokai Tokkyo Koho (2000), 5 pp. CODEN: JKXXAF JP 2000044642 A 20000215 CAN 132:138588 AN 2000:108171
   Fang, Ke; Ren, Yongjie; Zhang, Yang. Phenolic resin for high-quality friction material. Beijing Huagong Daxue Xuebao (1999), 26(4), 33-35. CODEN: BHDKFA ISSN:1007-2640. CAN 133:74652 AN 2000:103025
   Morita, Kazuya. Manufacture of compound rubber-adhered thermosetting resin-impregnated threads for friction materials. Jpn. Kokai Tokkyo Koho (2000), 6 pp. CODEN: JKXXAF JP 2000038458 A 20000208 CAN 132:123798 AN 2000:88374
   Tajima, Masao; Fujii, Tomoaki; Hasegawa, Makoto; Haga, Takahiro. Compositions containing highly reactive modified phenolic resins, their moldings, fiber-reinforced resin boards, friction materials, foams, adhesives, anticorrosive coatings, and fireproofing agents. Jpn. Kokai Tokkyo Koho (2000), 36 pp. CODEN: JKXXAF JP 2000001599 A 20000107 CAN 132:65508 AN 2000:20194
   Kotani, Naoki; Mizuno, Masahito. Friction materials with improved water resistance. Jpn. Kokai Tokkyo Koho (1999), 4 pp. CODEN: JKXXAF JP 11286676 A 19991019 Heisei. CAN 131:287491 AN 1999:665237
   Wang, Haiqing; Li, Li; Sun, Yi; Yang, Shujing; Sun, Yupu; Wang, Chengguo; Yao, Yongqiang. Preparation of friction materials with low friction coefficient. Feijinshukuang (1999), (3), 48-49,43. CODEN: FEIJDJ ISSN:0253-2298. CAN 131:229928 AN 1999:381058
   Radisic, A.; Valimbe, P. S.; Malhotra, V. M. Effects of additives on thermomechanical properties of composites formed from thermoset polymers. Materials Research Society Symposium Proceedings (1999), 542(Solid Freeform and Additive Fabrication), 13-18. CODEN: MRSPDH ISSN:0272-9172. CAN 131:130651 AN 1999:364810
   Duan, Shenxiu; Cheng, Ruizhen. Formulation and manufacture of friction-increasing spray oil. Faming Zhuanli Shenqing Gongkai Shuomingshu (1998), 3 pp. CODEN: CNXXEV CN 1170753 A 19980121 CAN 130:284355 AN 1999:277883
   Xie, Renhua; Ding, Zongyu; Shen, Haiping; Luo, Gemei. Effects of modified phenolic resins on the performances of composite friction materials made from petroleum pitch carbon fiber. Shiyou Lianzhi Yu Huagong (1999), 30(1), 30-32. CODEN: SLYHEE ISSN:1005-2399. CAN 130:297272 AN 1999:103101
   Wang, Haiqing; Li, Li; Sun, Yi; Yang, Shujing; Sun, Yulin; Wang, Chengguo; Yao, Yongqiang. Study of modified phenolic basis/hybrid fiber friction material. Suliao Gongye (1998), 26(6), 22-24. CODEN: SUGOF9 ISSN:1005-5770. CAN 130:210270 AN 1998:808325
   Ikeda, Takashi. Phenolic resin composition and manufacture from triazine, phenol, and aldehyde useful for hardeners and binders. Eur. Pat. Appl. (1998), 16 pp. CODEN: EPXXDW EP 877040 A1 19981111 CAN 129:344040 AN 1998:742184
   Lu, Yiping; Du, Yang; Che, Jianfei; Ma, Weihua; Song, Ye. Toughening modification of phenolic resin and its application in friction materials. Feijinshukuang (1998), (3), 54-56. CODEN: FEIJDJ ISSN:0253-2298. CAN 129:317142 AN 1998:578808
   Kato, Takanori; Hattori, Minoru; Ono, Yuzo; Maeda, Masanobu; Katsuoka, Hirotoshi; Kikuchi, Makoto; Ono, Manabu; Baba, Akio. Friction material compositions containing phenolic resins and resorcins. Jpn. Kokai Tokkyo Koho (1997), 4 pp. CODEN: JKXXAF JP 09302333 A 19971125 Heisei. CAN 128:62590 AN 1997:754489
   Kikuchi, Makoto; Hattori, Minoru; Ono, Yuzo; Maeda, Masanobu; Katsuoka, Hirotoshi; Kato, Takanori; Ono, Manabu. Phenolic resin compositions for low noise friction materials. Jpn. Kokai Tokkyo Koho (1997), 7 pp. CODEN: JKXXAF JP 09302332 A 19971125 Heisei. CAN 128:62589 AN 1997:754488
   Xiao, Dongzheng; Wu, Zhengyao; Yang, Wei. Study of a new friction material - the modification and application of phenolic resin. Suliao Gongye (1996), 24(2), 73-76. CODEN: SUGOF9 ISSN:1005-5770. CAN 127:308025 AN 1997:685408
   Uchida, Mitsuru; Fujii, Tomoaki. Highly reactive modified phenolic resin compositions and their heat- and wear-resistant moldings for friction materials. Jpn. Kokai Tokkyo Koho (1997), 12 pp. CODEN: JKXXAF JP 09095597 A 19970408 Heisei. CAN 127:18585 AN 1997:383590
   Hayashi, Tamotsu. Friction materials with improved fading resistance. Jpn. Kokai Tokkyo Koho (1997), 7 pp. CODEN: JKXXAF JP 09048967 A 19970218 Heisei. CAN 126:252240 AN 1997:276891
   Uchida, Mitsuru; Fujii, Tomoaki. Highly reactive modified phenolic resin friction materials and their manufacture. Jpn. Kokai Tokkyo Koho (1997), 11pp. CODEN: JKXXAF JP 09031441 A 19970204 Heisei. CAN 126:226057 AN 1997:250126
   Gu, Chengzhong; Hu, Fuzeng; Hu, Pin; Wu, Xuqin. Development of the boron-modified friction material. Feijinshukuang (1996), (3), 54-57. CODEN: FEIJDJ ISSN:0253-2298. CAN 126:239274 AN 1997:139527
   Ikeda, Hisashi; Kunitomo, Hideo. Triazine-modified phenolic resin compositions. Jpn. Kokai Tokkyo Koho (1996), 11 pp. CODEN: JKXXAF JP 08311142 A 19961126 Heisei. CAN 126:118586 AN 1997:118526
   Asami, Masakatsu. Polyamide-modified liquid phenolic resin compositions for wetters of abrasives and friction materials. Jpn. Kokai Tokkyo Koho (1996), 4 pp. CODEN: JKXXAF JP 08157689 A 19960618 Heisei. CAN 125:175511 AN 1996:557450
   Hirata, Koji; Yanagisawa, Kenichi. Dynamically crosslinked strong phenolic alloy resins. Jpn. Kokai Tokkyo Koho (1995), 6 pp. CODEN: JKXXAF JP 07331030 A 19951219 Heisei. CAN 124:234106 AN 1996:178989
   Roth, David W. H., Jr.; Das, Sajal. Process for production of cyanate-modified phenolic resins. U.S. (1996), 17 pp. CODEN: USXXAM US 5483013 A 19960109 CAN 124:147239 AN 1996:87561
   Ren, Zengmao; Ye, Runxi. Study on phenylamine-modified phenolic resin adhesive. Zhongguo Jiaonianji (1994), 3(4), 31-4. CODEN: ZJIAEA ISSN:1004-2849. CAN 123:315531 AN 1995:804066
   Hatsutori, Minoru; Maeda, Masanobu; limuro, Shigeru. Low-noise friction material compositions for automobile brakes or crutches. Jpn. Kokai Tokkyo Koho (1995), 4 pp. CODEN: JKXXAF JP 07041567 A 19950210 Heisei. CAN 122:316568 AN 1995:605565
   Muto, Tamotsu. Friction material compositions and formation of friction materials for ultrasound motors. Jpn. Kokai Tokkyo Koho (1994), 5 pp. CODEN: JKXXAF JP 06271776 A 19940927 Heisei. CAN 122:292755 AN 1995:538276
   Spehner, Jean-Leon; Eckert, Armin. Corrosion-protective coatings for friction materials. Ger. Offen. (1994), 5 pp. CODEN: GWXXBX DE 4314432 A1 19941110 CAN 122:242445 AN 1995:520327
   Misawa, Norio. Silicone-modified phenolic resin-based friction materials. Jpn. Kokai Tokkyo Koho (1994), 4 pp. CODEN: JKXXAF JP 06306186 A 19941101 Heisei. CAN 122:241828 AN 1995:513610
   Yanagisawa, Kenichi; Hirata, Koji. Tough phenolic resin compositions containing nitrile rubbers. Jpn. Kokai Tokkyo Koho (1994), 6 pp. CODEN: JKXXAF JP 06212056 A 19940802 Heisei. CAN 122:162508 AN 1995:169605
   Baba, Akio; Inoe, Mitsuhiro; Ito, Takuji; Hara, Yasuhiro; Kurita, Takaaki; To, Haruaki. Preparation of rubber dispersions of p-substituted phenol-modified phenolic resins. Jpn. Kokai Tokkyo Koho (1994), 4 pp. CODEN: JKXXAF JP 06100646 A 19940412 Heisei. CAN 121:206846 AN 1994:606846
   Baba, Akio; Inoe, Mitsuhiro; Ito, Takuji; Hara, Yasuhiro; Kurita, Takaaki; To, Haruaki. Manufacture of phenolic resins modified with p-substituted phenols. Jpn. Kokai Tokkyo Koho (1993), 4 pp. CODEN: JKXXAF JP 05320293 A 19931203 Heisei. CAN 120:324493 AN 1994:324493
   Misawa, Norio; Yuasa, Toshihiko. Friction materials with reduced low-frequency noises. Jpn. Kokai Tokkyo Koho (1994), 5 pp. CODEN: JKXXAF JP 06009945 A 19940118 Heisei. CAN 120:300848 AN 1994:300848
   Li, Qun; Li, Minjun; Pan, Guping; et al. Manufacture of tung oil-modified phenolic resins for friction brakes. Faming Zhuanli Shenqing Gongkai Shuomingshu (1993), 9 pp. CODEN: CNXXEV CN 1069037 A 19930217 CAN 120:78928 AN 1994:78928
   Subramaniam, N.; Blum, Frank D.; Dharani, L. R. Effects of moisture and other contaminants in friction composites. Polymer Engineering and Science (1993), 33(18), 1204-11. CODEN: PYESAZ ISSN:0032-3888. CAN 119:227439 AN 1993:627439
   Zhu, Guowang; Yao, Anyou; Zhou, Guohua. Study of tests on glass fiber-reinforced resin friction materials. Wuhan Gongye Daxue Xuebao (1992), 14(1), 38-43. CODEN: WGDXEY ISSN:1000-2405. CAN 119:161385 AN 1993:561385
   Shen, Yungcai; Qian, Xianglin. Tung oil-modified phenolic resin-bonded [asbestos-based] friction materials. Huadong Huagong Xueyuan Xuebao (1992), 18(3), 340-5. CODEN: HHKPDM ISSN:0253-9683. CAN 119:99152 AN 1993:499152
   Nagai, Yasuhiro; Haruyama, Shotaro; Aoki, Hiroshi; Ogawa, Yoshimi; Osakabe, Kanji. Heat-resistant phenolic resin compositions for friction materials. Jpn. Kokai Tokkyo Koho (1992), 4 pp. CODEN: JKXXAF JP 04320412 A 19921111 Heisei. CAN 119:29255 AN 1993:429255
   Magario, Akira. Wear-resistant friction materials. Jpn. Kokai Tokkyo Koho (1992), 4 pp. CODEN: JKXXAF JP 04366195 A 19921218 Heisei. CAN 118:130602 AN 1993:130602
   Nakano, Yoshitomo; Kada, Masumi; Hirayama, Ko. Phenolic resin compositions for friction materials. Jpn. Kokai Tokkyo Koho (1992), 5 pp. CODEN: JKXXAF JP 04100849 A 19920402 Heisei. CAN 117:112846 AN 1992:512846
   Lin, Yongwei; Huang, Yi; Liu, Changzhong; Shi, Meiling; Zhang, Dingquan; Zhang, Yuanmin. Properties of cashew nut oil- and melamine-modified phenolic resin. Feijinshukuang (1990), (3), 53-5,52. CODEN: FEIJDJ ISSN:0253-2298. CAN 116:60675 AN 1992:60675
   Tashiro, Ryoji; Kudo, Shigeru; Kimura, Keiji. Manufacture of clutch facing. Jpn. Kokai Tokkyo Koho (1990), 7 pp. CODEN: JKXXAF JP 02283923 A 19901121 Heisei. CAN 115:73249 AN 1991:473249
   Godfrey, Christopher Grenville; McCormick, Bryan Harvey. Friction compositions containing phenolic resin-poly(vinyl alkyl ether) blend binders and their uses. Eur. Pat. Appl. (1991), 8 pp. CODEN: EPXXDW EP 409495 A1 19910123 CAN 114:230324 AN 1991:230324
   Takei, Kyosuke. Rubber-modified cashew-containing clutch frictional material. Jpn. Kokai Tokkyo Koho (1991), 4 pp. CODEN: JKXXAF JP 03028535 A 19910206 Heisei. CAN 114:187264 AN 1991:187264
   Nakamura, Norikyo; Kumagai, Hirobumi; Fukuda, Jiro. Solvent-type carboxy-containing chloroprene elastomer-based adhesives. Jpn. Kokai Tokkyo Koho (1989), 3 pp. CODEN: JKXXAF JP 01118585 A 19890511 Heisei. CAN 112:57782 AN 1990:57782
   Tashiro, Akitsugu; Kobayashi, Yuji; Mukoyama, Yoshiyuki; Kimura, Keiji. Nitrile rubber-based binders for clutch facing materials. Jpn. Kokai Tokkyo Koho (1988), 6 pp. CODEN: JKXXAF JP 63284230 A 19881121 Showa. CAN 111:59412 AN 1989:459412
   Idemori, Kenjiro; Kushima, Yasuhiro; Nishida, Kenji; Nonaka, Keizo. Phenolic resin-rubber blends for friction materials. Jpn. Kokai Tokkyo Koho (1988), 11 pp. CODEN: JKXXAF JP 63241060 A 19881006 Showa. CAN 110:136630 AN 1989:136630
   Hou, Tingshu; Zhang, Enxian. Manufacture of SBR-modified phenolic resins as binders for automobile brake linings. Faming Zhuanli Shenqing Gongkai Shuomingshu (1987), 6 pp. CODEN: CNXXEV CN 86104223 A 19871230 CAN 110:76681 AN 1989:76681
   Dalea, Ion; Burdulea, Maria; Matyasin, Marta. Road markings based on butadiene copolymer rubbers and phenolic resins. Rom. (1987), 3 pp. CODEN: RUXXA3 RO 93571 B1 19871231 CAN 109:151620 AN 1988:551620
   Zhang, Y. M.; Wu, X. Q. Study of high-temperature high-friction coefficient material. Part 1: Three kinds of resin. Proceedings of the Institution of Mechanical Engineers, IMechE Conference (1987), (5, Tribol.-Frict., Lubr., Wear, Vol. 1), 247-52. CODEN: PIMCEL CAN 107:177406 AN 1987:577406
   Takarada, Mitsuhiro; Ishii, Hiroshi; Arai, Yutaka; Hamano, Takashi. Binders for friction materials. Jpn. Kokai Tokkyo Koho (1986), 6 pp. CODEN: JKXXAF JP 61192711 A 19860827 Showa. CAN 106:51340 AN 1987:51340
   Lambla, M.; Vo, V. C. Optimization of phenolic resins for friction materials. Polymer Composites (1986), 7(5), 262-73. CODEN: PCOMDI ISSN:0272-8397. CAN 105:227857 AN 1986:627857
   Lu, Wekun. Use of cresol resin in asbestos friction materials. Feijinshukuang (1985), (1), 48-9. CODEN: FEIJDJ ISSN:0253-2298. CAN 103:162279 AN 1985:562279
   Schmidt, Manfred; Fries, Hermann; Esch, Erich. Siloxane-modified novolaks for producing friction linings. Ger Offen. (1980), 19 pp. CODEN: GWXXBX DE 2900185 19800717 CAN 93:115628 AN 1980:515628
   Bark, L. S.; Moran, D.; Percival, S. J. Inorganic and organic changes during friction material performance. Wear (1979), 53(1), 107-13. CODEN: WEARAH ISSN:0043-1648. CAN 90:187726 AN 1979:187726
   Brodsky, Philip H. Brake lining compositions having friction particles of an aromatic amine modified novolac resin and an aromatic carboxylic compound. U.S. (1978), 13 pp. CODEN: USXXAM US 4101500 19780718 CAN 90:39877 AN 1979:39877
   Belyi, V. A.; Sysoev, P. V.; Korshunov, A. I. Effect of the medium on the antifriction properties of composite materials based on Ftoroplast and modified phenolic resin. Fiziko-Khimichna Mekhanika Materialiv (1976), 12(3), 113-14. CODEN: FKMMAJ ISSN:0430-6252. CAN 86:6224 AN 1977:6224
   Kawasaki, Kazuaki; Kaneko, Yoshikazu; Takamura, Kenichi. Resin compositions for frictional materials. Jpn. Kokai Tokkyo Koho (1974), 3 pp. CODEN: JKXXAF JP 49005497 19740118 Showa. CAN 83:60470 AN 1975:460470
2. For this work we used a Microscal Model 3 Flow-microcalorimeter.
3. Groszek, J.J., Lubric. Sci. Technol., 1966, 9, 67.

## Claims

1. Friction material comprising a base material impregnated with a composition comprising a resin, the resin comprising a phenolic resin, and at least one surface-active functional group chemically modifying the resin, wherein the phenolic resin is modified with aldehyde groups, acid groups, ester groups or ketone groups or wherein the phenolic resin further comprises a high number of surface hydroxyl groups that are bonded directly to phenolic rings via a hydrocarbon chain.

2. Friction material as claimed in claim 1, wherein the base material is a woven fibrous material.

3. Friction material as claimed in claim 1, wherein the base material comprises from about 5 to about 75 % cotton fibers, about 5 to about 75 % aramid fibers, and 5 to about 75 % carbon fibers.

4. Friction material as claimed in claim 1, wherein the base material has an average pore diameter of about 0.5 to about 200 µm.

5. Friction material as claimed in claim 1, wherein the base material comprises about 5 to about 75 % by weight of a less fibrillated aramid fiber; about 5 to about 75 % by weight cotton fibers, about 5 to about 75 % by weight carbon fibers; and about 5 to about 75 % by weight of a filler material.

6. Friction material as claimed in claim 1 in the form of a clutch facing, a brake shoe lining or a synchronizer.

## Patentansprüche

1. Reibungsmaterial, umfassend ein Basismaterial, das mit einer Zusammensetzung imprägniert ist, die ein Harz umfasst, wobei das Harz ein Phenolharz und mindestens eine oberflächenaktive funktionelle Gruppe umfasst, welche das Harz chemisch modifiziert, wobei das Phenolharz mit Aldehydgruppen, Säuregruppen, Estergruppen oder Ketongruppen modifiziert ist oder wobei das Phenolharz ferner eine hohe Anzahl Hydroxylgruppen an der Oberfläche umfasst, die über eine Kohlenwasserstoffkette direkt an Phenolringe gebunden sind.

2. Reibungsmaterial nach Anspruch 1, wobei das Basismaterial ein gewebtes Fasermaterial ist.

3. Reibungsmaterial nach Anspruch 1, wobei das Basismaterial von ungefähr 5 bis ungefähr 75 % Baumwollfasern, ungefähr 5 bis ungefähr 75 % Aramidfasern und 5 bis ungefähr 75 % Kohlenstofffasern umfasst.

4. Reibungsmaterial nach Anspruch 1, wobei das Basismaterial einen durchschnittlichen Porendurchmesser von ungefähr 0,5 bis ungefähr 200 µm aufweist.

5. Reibungsmaterial nach Anspruch 1, wobei das Basismaterial ungefähr 5 bis etwa 75 Gew.-% einer weniger fibrillierten Aramidfaser; ungefähr 5 bis ungefähr 75 Gew.-% Baumwollfasern; ungefähr 5 bis ungefähr 75 Gew.-% Kohlenstofffasern; und ungefähr 5 bis ungefähr 75 Gew.-% eines Füllmaterials umfasst.

6. Reibungsmaterial nach Anspruch 1 in der Form eines Kupplungsbelags, eines Bremsbackenbelags oder einer Synchronisiervorrichtung.

## Revendications

1. Matériau de friction comprenant un matériau de base imprégné d'une composition comprenant une résine, la résine comprenant une résine phénolique, et au moins un groupe fonctionnel tensioactif modifiant d'un point de vue chimique la résine, dans lequel la résine phénolique est modifiée avec des groupes aldéhyde, des groupes acide, des groupes ester ou des groupes cétone ou dans lequel la résine phénolique comprend en outre un grand nombre de groupes hydroxyle de surface qui sont liés directement à des noyaux phénoliques par le biais d'une chaîne hydrocarbonée.

2. Matériau de friction selon la revendication 1, dans lequel le matériau de base est un matériau fibreux tissé.

3. Matériau de friction selon la revendication 1, dans lequel le matériau de base comprend d'environ 5 à environ 75 % de fibres de coton, d'environ 5 à environ 75 % de fibres aramides, et d'environ 5 à environ 75 % de fibres de carbone.

4. Matériau de friction selon la revendication 1, dans lequel le matériau de base présente un diamètre de pore moyen d'environ 0,5 à environ 200 µm.

5. Matériau de friction selon la revendication 1, dans lequel le matériau de base comprend d'environ 5 à environ 75 % en poids d'une fibre aramide moins fibrillée ; d'environ 5 à environ 75 % en poids de fibres de coton ; d'environ 5 à environ 75 % en poids de fibres de carbone ; et d'environ 5 à environ 75 % en poids d'une matière de charge.

6. Matériau de friction selon la revendication 1 se présentant sous la forme d'une garniture d'embrayage, d'une garniture de sabot de frein ou d'un synchroniseur.
